(19) Europäisches Patentamt
European Patent Office
Office européen des brevets

(11) EP 3 764 198 A1

(12) EUROPEAN PATENT APPLICATION

(43) Date of publication:
13.01.2021 Bulletin 2021/02

(51) Int Cl.:
G06F 3/01 (2006.01)
F03G 7/06 (2006.01)
B81B 3/00 (2006.01)
C22F 1/00 (2006.01)
B06B 1/06 (2006.01)

(21) Application number: 19185387.8

(22) Date of filing: 10.07.2019

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(71) Applicant: Robert Bosch GmbH
70442 Stuttgart (DE)

(72) Inventors:
• Jeon, Jin Han
558962 Singapore (SG)
• So, Yong Heng
564596 Singapur (SG)

(54) ACTUATOR, DEVICE INCLUDING THE SAME AND METHODS

(57) An actuator (100), including an electroactive layer (110) and an elastic layer (120) connected to each other, the electroactive layer (110) including an electroactive material having an operating temperature range (TR1). The elastic layer (120) has a first elastic modulus at a first temperature (T1), and a second elastic modulus lower than the first elastic modulus, at a second temperature (T2) higher than the first temperature (T1). The electroactive layer is adapted to exert a first force onto the elastic layer (120) that opposes a restoring force of the elastic layer, when a voltage is applied to the electroactive layer. The elastic layer (120) may include an elastic material layer, which may include a shape memory polyurethane. A touch screen comprising a plurality of actuators, a method of producing the touch screen and a method of operating the actuator are described.

FIG. 1

## Description

## TECHNICAL FIELD

The present disclosure relates to an actuator, a device including the actuator, such as a tactile electronic display, and methods for producing the actuator and the tactile electronic display.

## BACKGROUND

There is an increasing trend of haptic applications for hand-held touch sensitive interfaces, i.e. Braille display, in fields of consumer electronics (CE). Haptic feedback, especially haptic actuator, recreates a tactile sensation in a user interface device by delivering either mechanical forces, pressures or vibrations to convey information to a user for enhanced user experiences. Today's haptic touch interfaces are mostly featured with vibrational haptic feedback driven by miniaturized motors, i.e. inertia-type actuators such as Eccentric Rotating Mass (ERM, which uses a small unbalanced mass on a DC motor) and Linear Resonant Actuator (LRA, which contains a small internal mass attached to a spring). These haptic actuators have several limitations particularly of bulky size, heavy, noisy, lack of realistic feedback and complex mechanical design. Modifiable static tactile electronic displays are not feasible with such actuators. Alternative modifiable static tactile electronic displays are also very bulky and of complex mechanical design, for example requiring fluidic pumps for operating. Therefore, there is a desire to solve above mentioned problems.

## SUMMARY

It is therefore, object of the invention to provide an improved actuator, a device including the actuator, such as a tactile electronic display, and methods for producing the actuator and the tactile electronic display.

Various embodiments concern an actuator. The actuator may include an electroactive layer and an elastic layer. The electroactive layer may be connected to the elastic layer. The electroactive layer may include an electroactive material, for example connected to a first electrode and a second electrode. The electroactive material has an operating temperature range. The elastic layer has a first elastic modulus at a first temperature, and a second elastic modulus lower than the first elastic modulus, at a second temperature higher than the first temperature. The operating temperature range of the electroactive material may include the first temperature and the second temperature. The electroactive layer may be adapted to exert a first force onto the elastic layer that opposes a restoring force of the elastic layer when a voltage is applied to the electroactive layer. The elastic layer may include an elastic material layer, and the elastic material layer may include a shape memory polyurethane.

Various embodiments concern a touch screen including a plurality of actuators, each actuator may be in accordance as described in the present disclosure.

Various embodiments concern a method of producing the touch screen. The method may include providing the substrate and providing an electroactive layer pattern on the substrate, the electroactive pattern may include the patterns for each of the electroactive layers of the plurality of actuators. The method may further include providing an elastic layer pattern on the substrate, for example, on the electroactive pattern. The elastic layer pattern may include the patterns for each of the elastic layers of each of the plurality of actuators. The elastic layer pattern may be disposed farther from the substrate than the electroactive layer pattern. Each of the elastic layers may be disposed farther from the substrate than each corresponding electroactive layer.

Various embodiments concern a method of operating an actuator, the actuator may be an actuator as described in the present disclosure. The method may include heating the elastic layer to the second temperature. The method may further include applying a first voltage to the electroactive layer. The first voltage may be unequal to 0 V, thereby setting a first shape of the actuator, reducing the temperature of the elastic layer by at least partially removing the application of heat. The elastic layer may include a shape memory material, optionally a shape memory polymer. The method may include, when starting of the actuator being in the first shape, reducing the temperature of the elastic layer by at least partially removing the application of heat causes a thermal contraction of the elastic layer, thereby setting an intermediate shape of the actuator. The method may include setting an intermediate shape of the actuator, which may include applying a second voltage smaller than the first voltage, and heating the elastic layer to the second temperature. The method may further include reducing the temperature of the elastic layer by at least partially removing the application of heat, thereby setting an intermediate shape of the actuator. An initial shape of the actuator may be set when the temperature of the elastic layer is the second temperature and no voltage or 0 V is applied to the electroactive layer.

## BRIEF DESCRIPTION OF THE DRAWINGS

In the following description, various embodiments of the present disclosure are described with reference to the following drawings, in which:

FIG. 1(a) shows an actuator 100 in an initial shape S0;
FIG. 1(b) shows the actuator 100 subject to heat at a second temperature T2, and not subject to any external forces, the actuator 100 remains in the initial shape S0;
FIG. 1(c) shows the actuator 100 being deformed in a first shape S1 due to application of voltage on an electroactive layer 110;

FIG. 1(d) shows the actuator 100 at a first temperature ($<T2$) and without application of a voltage to the electroactive layer 110. The actuator 100 remains in a second shape S2 with a slightly larger deformation than the first shape S1;

FIG. 2 shows an exemplary timing diagram for the operation of an actuator 100 from an initial shape S0 in a time interval $t_1$, to a first shape S1 in a time interval $t_3$, and to a second shape S2 in time intervals $t_4$ and $t_5$;

FIG. 3 shows a diagram representing the elastic modulus (vertical axis) as function of temperature (horizontal axis) for an elastic layer 120;

FIGs. 4(a)-(c) show an actuator 100 showing three different shapes under three different conditions;

FIGs. 5(a)-(d) show an actuator 100 wherein a heating resistance is at least partially provided by the resistance of the elastic layer 120, which is optionally electrically isolated from the electroactive layer 110 by insulator 108;

FIGs. 6(a)-(d) show an actuator 100 wherein the elastic layer 120 is shorter than the electroactive layer 110, meaning that elastic layer 120 and electroactive layer 110 only partially overlap in a first direction;

FIG. 7 shows an exemplary actuator 100 and the electrodes 111 and 112 for applying a voltage on the electroactive layer 110, and electrodes 131 and 132 for applying current on at least one layer of the elastic layer 120 for providing resistive heat;

FIGs. 8(a)-(c) show exemplary geometries for the layer patterns of heating elements;

FIG. 9(a) shows a schematic top view (upper part of the figure) and a cross section A-A' (lower part of the figure) of an actuator 100 according to some embodiments. FIG. 9(b) and (c) show the respective cross section A-A' of FIG. 9(a) under different actuation conditions.

FIG. 10(a) shows a schematic top view (upper part of the figure) and a cross section B-B' (lower part of the figure) of an actuator 100, in an initial shape S0, according to some embodiments; FIG. 10(b) shows the cross section B-B' when the actuator is in a first shape S1; FIG. 10(c) shows the cross section B-B' when the actuator is in a second shape S2.

FIG. 11 (a) shows a schematic top view (upper part of the figure) and a cross section C-C' (lower part of the figure) of an actuator 100, in an initial shape S0, according to some embodiments; FIG. 11(b) shows the cross section C-C' when the actuator is in a first shape; FIG. 11(c) shows the cross section C-C' when the actuator is in a second shape S2;

FIG. 12 shows a schematic representation of a touch screen including a plurality of actuators.

## DETAILED DESCRIPTION

In the description which follows, the drawing figures are not necessarily to scale and certain features may be shown in generalized or schematic form in the interest of clarity and conciseness or for informational purposes.

The following detailed description describes specific details and embodiments in which the invention may be practiced. These embodiments are described in sufficient detail to enable those skilled in the art to practice the invention. Other embodiments may be utilized and changes may be made without departing from the scope of the invention. The various embodiments are not necessarily mutually exclusive, as some embodiments can be combined with one or more other embodiments to form new embodiments.

Features that are described in the context of an embodiment may correspondingly be applicable to the same or similar features in the other embodiments. Features that are described in the context of an embodiment may correspondingly be applicable to the other embodiments, even if not explicitly described in these other embodiments. Furthermore, additions and/or combinations and/or alternatives as described for a feature in the context of an embodiment may correspondingly be applicable to the same or similar feature in the other embodiments.

The invention illustratively described herein may suitably be practiced in the absence of any element or elements, limitation or limitations, not specifically disclosed herein. Thus, for example, the terms "comprising", "including," containing", etc. shall be read expansively and without limitation. The word "comprise" or variations such as "comprises" or "comprising" will accordingly be understood to imply the inclusion of a stated integer or groups of integers but not the exclusion of any other integer or group of integers. Additionally, the terms and expressions employed herein have been used as terms of description and not of limitation, and there is no intention in the use of such terms and expressions of excluding any equivalents of the features shown and described or portions thereof, but it is recognized that various modifications are possible within the scope of the invention claimed. Thus, it should be understood that although the present invention has been specifically disclosed by exemplary embodiments and optional features, these are not limiting, and modification and variation of the inventions embodied herein disclosed may be resorted to by those skilled in the art, and that such modifications and variations are considered to be within the scope of this invention.

An actuator according to various embodiments may be a latching actuator, for example it may include a first state and a second state different from the first state, and after a transition from the first state to the second state or vice-versa, the state may be kept, for example when the actuator is at the first temperature, e.g., after the heating resistance is essentially powered off, or even when the complete actuator is powered off. Due to the holding effect (state is essentially kept), a lower energy consumption and higher energy efficiency is achievable compared to conventional electroactive actuators.

The control of the elastic modulus of the elastic layer 120 (or of the elastic material layer 122), via temperature change, means that the elastic modulus of the actuator 100 is controllable, at least in the actuation portion. Thus, the holding force can be enhanced and back-relaxation issues may be improved with an actuator in accordance with various embodiments compared to a conventional electroactive material actuator. The actuators according to various embodiments may retain large deformations and holding forces, without requiring continuous electrical excitation, due to high elastic modulus of the elastic material layer.

The elastic modulus of the actuator may be determined by fixing the actuator on both ends and determining the stress / strain curve by applying tensile stress and determining the slope of a corresponding stress-strain curve. Similar tests may be performed for individual layers of the actuator, for example the electroactive layer, the elastic layer.

The elastic layer, in accordance with various embodiments, may, at the first temperature, be stiffer than the electroactive layer. Further, at the second temperature, the electroactive layer may be stiffer than the elastic layer. The first temperature may be lower than the glass transition temperature of the elastic material layer and the second temperature may be higher than the glass transition temperature of the elastic material layer. For example, the first temperature may be selected from the range of 20 °C to the glass transition temperature - 5 °C. The second temperature may be selected from the glass transition temperature + 5 °C to 70 °C. The glass transition temperature may be selected, for example, between 30 °C to 50 °C, for example between 35 °C to 45 °C, further for example between 35 °C to 40 °C. The second temperature may be limited to temperatures below 50 °C, further preferably below 45 °C. Temperatures below 45 °C have the advantage that a user would, if he contacts a surface of the actuator at that temperature, not feel the heat in form of pain, for example as too hot.

In some embodiments, the actuator may include a thermal encapsulation layer on top of the elastic layer. Accordingly, the touch screen including a plurality of actuators may also include a thermal encapsulation layer. This layer may provide additional safety to the user.

According to various embodiments, the operating temperature range may be chosen from the range of 20 °C to 100 °C, for example the range may be 20 °C to 70 °C or, in another example, 20 °C to 45 °C. The operating temperature range may include the first temperature and the second temperature.

The elastic layer according to various embodiments, may include a shape memory material, optionally a shape memory polymer, which is configured to return to a pre-determined position at the second temperature when no external forces are applied. According to various embodiments, the elastic material layer may include or substantially consist of a shape memory polymer, for example shape memory polyurethane (SMPU). SMPUs are commonly available in the market and can be procured with different specifications. For example, an SMPU may show a two-way modulus change through temperature changes from 20 °C to 70 °C, thus the operating temperature range may be chosen as from 20 °C to 70 °C. Exemplary SMPUs are thermoplastic polyurethane, polyurethane of the polyether polyol series, aromatic poly(ether urethane) with shape memory properties. One of commercially available SMPUs, e.g. MM4510 pellets from SMP Technologies Inc., has a glass transition temperature of 45 °C very near a bit high room temperature. As other SMPUs are able to memorize an initial shape, to be deformed and held in a temporary shape under specific conditions of temperature and stress, and then to relax to the initial shape upon thermal command. That is an enormous change (c.a. 1000x) in elastic modulus from 2.15 GPa at 20 °C to 1.4 MPa at 70 °C within reasonable working temperature range for haptic application. Another exemplary material is the MM3510, with a glass transition temperature of 35 °C. Exemplary SMPUs may have a glass transition temperature selected, for example, between 30 °C to 50 °C, for example between 35 °C to 45 °C, further for example between 35 °C to 40 °C.

The term "initial shape" as used herein, may mean the shape of the actuator when the elastic layer is at the second temperature without application of voltage (or at 0 V) to the electroactive layer, and/or the shape of the actuator after the temperature of the elastic layer has been transitioned from the second temperature T2 to the first temperature T1 while no voltage or 0 V is applied to the electroactive layer.

The electroactive layer may be adapted to exert a first force onto the elastic layer that opposes a restoring force of the elastic layer, when a voltage is applied to the electroactive layer. The elastic layer, and the electroactive layer may be configured such that, when the elastic material layer is at the second temperature, a shape of the actuator is adjustable by controlling the first force of electroactive layer. Conversely, the electroactive layer and the elastic layer may be configured such that the shape of the actuator remains substantially unmodified and therefore the state is kept, when the elastic material layer is kept at the first temperature, independently of any voltage applied to the electroactive layer. For example, a maximum force applicable by the electroactive layer may be insufficient to overcome the restoring force of the elastic layer and thus unable to substantially change a shape of the elastic layer. It can be said that the shape of the actuator is frozen at the first temperature. Therefore a latching actuator may be provided.

Means for controlling the temperature of the elastic material layer may be provided, in accordance with various embodiments. For example, the actuator may further include a heating resistance configured to provide heat to the elastic material layer.

In some embodiments, the heating resistance may be provided by an electrical resistance of the elastic material layer itself, which may form a resistor. In such embodiments, a pair of electrodes may be in contact with the elastic material layer, so that Joule heating may be provided due to the application of a voltage to the electrodes, which may generate an electric current passing through the elastic material layer. Thus, in accordance with some embodiments, the elastic material layer may be connected to a pair of electrodes and/or the elastic material may include a pair of electrodes. The elastic material layer may include a material capable of transporting electric current with a resistance (electrical resistance) greater than zero. For example, conductive nanofillers may be selected from carbon black (CB), carbon nanotubes (CNT), carbon fibers, graphene, metallic particles, metallic nanowires, and mixtures thereof. In such embodiments, the heating resistance is at least partially provided by the resistance of the elastic layer. One example of an elastic material layer including a heating resistance is an SMPU layer mixed with conductive nanofillers.

In some embodiments, alternatively or in addition to foregoing case, the elastic layer may further include a heating element including a resistive material. The heating element may include a conductor (for example a metal strip) which may be configured (for example, according to its geometric dimensions) to provide a suitable resistance, or a flexible matrix including nanofillers. For example, the flexible matrix may be selected from polydimethylsiloxane (PDMS), Ecoflex (Smooth-On, Inc.) or other soft elastomer. For example, conductive nanofillers may be selected from carbon black (CB), carbon nanotubes (CNT), carbon fibers, graphene, metallic particles, metallic nanowires, and mixtures thereof. The heating element is in thermal contact with the elastic material layer of the elastic layer. The resistance of the heating element may thus contribute or be equal to the heating resistance. The heating element may have a length which is longer than a longest outer dimension of the elastic layer.

A substrate may be included in the actuator according to various embodiments. The electroactive layer may include a first portion and a second portion. The first portion of the electroactive layer may be arranged on a fixed position in relation to the substrate. The second portion of the electroactive layer may be moveable between a first position and a second position, for example, the second position being farther from the substrate than the first position. For example, when the electroactive layer is submitted to the voltage, the second portion may bend away from the substrate. The first position may correspond to an initial shape of the actuator. The second position may correspond to the first shape of the actuator. According to various embodiments, a latching direction may be essentially perpendicular to the substrate.

The actuator according to various embodiments may include layers, such as an elastic layer and an electroactive layer. The elastic layer and the electroactive layer may overlap at least partially in a first direction. The first direction, as used in the present disclosure, may be a direction from a first portion arranged on a fixed position in relation to the substrate to a second portion which is moveable in relation to the substrate. The first portion and the second portions may be, e.g., on opposite extremes of the electroactive layer. In some embodiments, the electroactive layer may be disposed closer to the substrate than the elastic layer.

In accordance with various embodiments, the term "connected" as used herein with layers may mean that the layers are in physical contact, for example in a stack of layers including said layers.

In accordance with various embodiments, the expression "at least partially" as used herein may include the meaning of substantially fully or substantially complete.

In accordance with various embodiments, the term "electroactive layer" may mean a layer which may undergo a shape change in response to an applied voltage. The electroactive layer may include an electroactive material, e.g. an electroactive polymer. Within the context of the present disclosure and in accordance with various embodiments, an electroactive material, e.g., an electroactive polymer (EAP), is a material (a polymer in case of EAP) that undergoes shape change in response to an applied voltage. Thus, a force may result due to the applied voltage impelling the electroactive layer to change shape.

In accordance with various embodiments, the term "shape" when describing an element comprising an electroactive layer such as a segment, may mean for example, a bending, a change in at least one dimension such as length, a change in volume, a change in conformation, or a combination thereof. For example, a change of shape of a cantilever shaped electroactive layer or a segment of a plurality of segments of a segmented electroactive layer may mean that the cantilever or segment bends, e.g. to one side.

Examples of electroactive polymers may include: dielectric EAP (dEAP), ferroelectric polymer (FerroEAP), ionic EAP (iEAP).

Ionic EAP (iEAP) may be used to generate large bending deformation under low driving voltage (for example, voltages lower or equal to 5 V), and are therefore a good soft actuator technology particularly for reversible actuator applications such as surface coverage haptic actuator applications. Some advantages of iEAP are low voltage driving mechanisms, fast response, reliability, large actuation force and out-of-plane (protrusion type) deformation. Furthermore, snap-through and bi-stable mechanism may be applied to the design of the reversible actuators, e.g. buckled iEAP based cantilever actuators, in accordance with various embodiments. The use of iEAP as electroactive material, in an electroactive layer in an actuator according to various embodiments, has the advantage of a faster ionic response (i.e. higher ionic conductivity at the increased temperature) upon heating via temperature increase of the elastic material layer, which may result in a faster actuation.

In some embodiments, the second portion of the electroactive layer may be at least partially surrounded by the first portion. The second portion may include a center opening. The elastic layer may be at least partially disposed on the electroactive layer and may cover at least partially the central opening. For example, the second portion and the first portion of the electroactive layer may be concentric with the opening and the elastic layer.

The actuator may be implemented as a haptic feedback actuator providing haptic feedback, for example, to a user's finger. The actuator may further include sense function to sense external force applied to the actuator, for example, if the external force (e.g., of a user's finger) overcomes the restoring force of the actuator, the resulting force may move (e.g. bend) the electroactive layer, thereby providing an electric signal which may be read and interpreted by a sensing circuit. Thus, the present invention enables shape-shifting and - holding buttons using the actuator according to various embodiments, for example, the button may be a latching actuator.

**Touch Screen**

The touch screen, according to various embodiments, may include a plurality of actuators as described herein, for example including sense function to sense external force applied to the actuator. The actuators may be arranged in repetitive pattern, for example in a matrix of row and columns format. The plurality of actuators may be provided on a common substrate. The plurality of actuators may be electrically coupleable to a controlling and sensing circuit, so that electric signals may be applied independently to each of the plurality of actuators or wholly to the plurality of actuators, by the controlling and sensing. The plurality of actuators may be electrically coupled to the controlling and sensing circuit. The touch screen may include the controlling and sensing circuit. The controlling and sensing circuit may be configured to provide the voltage to the electroactive layer and another voltage to the elastic material layer, which may vary for each actuator of the plurality of actuators. Each actuator of the plurality of actuators may be controlled independently. The controlling and sensing circuit may further be configured to sense an electric signal generated by the electroactive layer upon application of external force onto each of actuator of the plurality of actuators. Each actuator of the plurality of actuators may be sensed independently. Thus, the touch-screen may provide sensing function and haptic feedback, the touch screen may also be named as in/out haptic touch screen.

The touch-screen according to various embodiments may be used for a haptic input/output interface, for example a haptic touch screen which may include a display. Various embodiments also concern devices including the touch-screen, such as a hand-held device including a haptic input/output interface, a wearable haptic feedback device including a haptic input/output interface, or other human machine interfaces including a haptic input/output interface. Such devices may enable users to feel shape, texture, deformation, movement, vibration, and weight of virtual objects (VR/AR). The actuators according to various embodiments enable high-definition of human machine interfaces. Further examples of devices include smart glove with realistic touch/feedback sensations, touch sensitive surface applications (non-touch display) such as dashboard for automotive application, flexible thin Braille display and seamless control panel for consumer electronics, smart textile / fabric with haptic features.

**Method of Producing**

Various embodiments concern a method of producing the touch screen. The method may include providing the substrate. The method may further include providing an electroactive layer pattern on the substrate. The electroactive pattern may include patterns for each of the electroactive layers of the plurality of actuators. The method may further include providing an elastic layer pattern on the substrate, for example, on the electroactive pattern. The elastic layer pattern may include the patterns for each of the elastic layers of each of the plurality of actuators. The elastic layer pattern may be disposed farther from the substrate than the electroactive layer pattern. Each of the elastic layers may be disposed farther from the substrate than each corresponding electroactive layer. Electrode patterns may further be provided to allow electric communication to each of the actuators, for example to each heating resistance of the plurality of actuators and to each of the electroactive layers of the plurality of actuators. The electroactive pattern and the elastic layer pattern once provided on the substrate, overlap and form the plurality of actuators, which may be arranged in a certain repeating pattern, for example in rows and columns. The plurality of actuators may include additional layers and/or elements.

**Method of Operating**

Various embodiments concern a method of operating an actuator, the actuator may be an actuator as described in the present disclosure. The method may include heating the elastic layer to the second temperature. The method may further include applying a first voltage to the electroactive layer. The first voltage may be unequal to 0 V, thereby setting a first shape of the actuator. The method may further include reducing the temperature of the elastic layer by at least partially removing the application of heat, thereby setting a second shape, i.e. the latching mechanism is kept at a same state even when no external electrical power is applied to the electroactive layer and the elastic layer. The elastic layer may include a shape memory material, optionally, a shape memory polymer as previously explained. The method may further include applying a second voltage smaller than the first voltage. The method may further include heating the elastic layer to the second temperature, thereby setting the actuator to a shape which may be between the initial shape and the first shape. The method may further include reducing the temperature of the elastic layer by at least partially removing the application of heat, thereby setting an intermediate shape of the actuator.

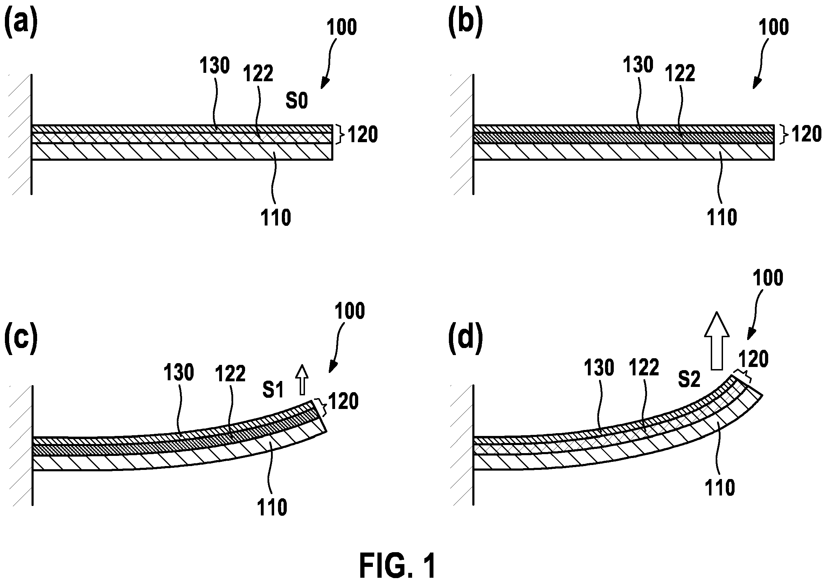

FIG. 1(a) shows an actuator 100 in an initial shape S0. The actuator 100, may include: an electroactive layer 110 connected to an elastic layer 120. The electroactive layer 110 may include an electroactive material connected to a first electrode and a second electrode (not shown). The electroactive material may include an operating temperature range TR1. The elastic layer 120 may include a first elastic modulus at a first temperature T1, and a second elastic modulus lower than the first elastic modulus, at a second temperature T2 higher than the first temperature T1. The first temperature T1 and the second temperature T2 of the elastic layer 120 are within an operating temperature range of the electroactive material. A restoring force of the elastic layer 120 is opposable by a first force applied by the electroactive layer when the electroactive layer is submitted to a voltage. The electroactive layer 110 is adapted to exert a first force onto the elastic layer 120 that opposes the restoring force. For example, in a first state the electroactive layer 110 may have an initial shape, which is shown in FIG. 1(a) has parallel layers for illustration purposes. Once the elastic material layer 122 of the elastic layer 120 is brought to the second temperature T2 (FIG. 1(b)), for example by heat provided by the resistance of heating element 130, the shape of the electroactive layer 110 may be changed, for example by activating the electroactive layer 110, for example by application of a voltage to electrodes contacting the electroactive layer 110, as shown in FIG. 1(c). At the second temperature T2 the restoring force of the elastic layer 120 may be considered negligible in relation to the force exerted by the electroactive layer 110. In FIG. 1(c), the actuator may be in a first shape S1. After cooling of the elastic layer 120 to the first temperature T1, the combined effects of the much higher elastic modulus of the elastic layer 120 at the first temperature T1 (than at T2) and the thermal contraction of the elastic layer 120 may bring and keep the actuator into a second shape S2. The second shape is maintained, even after release or reduction of the voltage applied to electrodes contacting the electroactive layer 110. FIG. 1(d) shows the actuator 100 at a first temperature (<T2) and without application of a voltage to the electroactive layer 110. The actuator 100 remains in the second shape S2, which second shape S2 is a shape corresponding to the second state. The first and second shapes are shown for illustration purposes, the actuator 100 may be configured to another shape, depending on the applied voltage on the contacting the electroactive layer 110 when the elastic layer 120 is at the second temperature T2. In the example shown according to some embodiments, a left side of the actuator 100 is fixed, e.g. to a substrate or another material on a substrate (not shown), e.g., parallel to the actuator (when the actuator is in the shape shown in FIG. 1(a)). In such embodiments, a change in shape corresponds to a change in position of the right side of the actuator, i.e., the side which is not fixed, and therefore free to move according to the applied voltage on the contacting the electroactive layer 110 when the elastic layer 120 is at the second temperature T2.

In one example according to FIGs. 1(a) to (d), the elastic layer 120 includes an elastic material layer 122 including SMPU (for example substantially consisting of SMPU), and a heating element 130 in the form of a layer disposed over the elastic material layer 122, wherein the heating element 130 includes PDMS/CB. As electric excitation signal is applied to the heating element 130, it induces Joule heating in the heating element 130. Since the elastic material layer 122 is in thermal contact with the heating element 130, the temperature of SMPU layer will increase. When the temperature increases to reach near its glass transition temperature (or above at elevated temperature to considerably reduce the modulus), the stiffness of the SMPU layer diminishes. The resulted stiffness change on the SMPU layer can be of a factor of over 1000 in modulus, for example from 2.15 GPa at 20 °C to 1.4 MPa at 70 °C. Even though the elastic material layer may show volume expansion with higher temperatures (e.g., at rubber state), this volume expansion is not substantially detrimental for generating moderate bending motion due to its much lower modulus (1.4 MPa) compared to those of conventional electroactive layers (-300 MPa). By synchronizing the electric excitation signals supplied to Joule heating of the elastic layer 120 and actuation of electroactive layer 110, the electroactive layer 110 (e.g. iEAP cantilever) coupled to the elastic layer 120 (e.g., including an SMPU layer) can generate a large actuation, which is almost the same to an electroactive layer without the elastic layer 120, due to much lower modulus of the heated elastic material layer 122 (e.g. SMPU layer), as shown in FIG. 1(c).

The electroactive layer 110 coupled to the elastic layer 120, for example iEAP layer coupled to an SMPU layer and a heating element, shows large holding force even after turning off the electric excitation, resulting from higher modulus change as well as volume contraction of the elastic material layer 122, which for a SMPU layer is 2.15 GPa at 20 °C, as shown in FIG. 1(d). Therefore, by adjusting the temperature change on the elastic material layer 122, controllable modulus and moderate volume contraction can be achieved to enhance the holding force and overcome back-relaxation issues of conventional electroactive actuators without further external energy supply. Once the elastic material layer is heated, and no power is applied to the electroactive layer, the actuator returns to the initial shape S0, for example as shown in FIG. 1(b).

The terms "first state" and "second state" as used herein in connection with the actuator, and in accordance with embodiments of the present disclosure, may mean two states of the actuator which are different from each other. For example, in embodiments, the first state may have a shape of the actuator when the elastic material layer is at a second temperature T2 and no voltage (or zero voltage) is applied to the electroactive layer, and the second state may have a shape achievable by transitioning the temperature of the elastic material layer from the second temperature T2 to the first temperature T1 when voltage unequal to 0 V is applied to the electroactive layer. In other embodiments, for example, the first state may have a shape achievable by transitioning the temperature of the elastic material layer from the second temperature T2 to the first temperature T1 when no voltage (or zero voltage) is applied to the electroactive layer, and the second state may refer to a shape achievable by transition from the second temperature T2 to the first temperature T1 when voltage unequal to 0 V is applied to the electroactive layer. The first state and the second state may be the latching states of the actuator, for example, each when the elastic layer is at the first temperature T1.

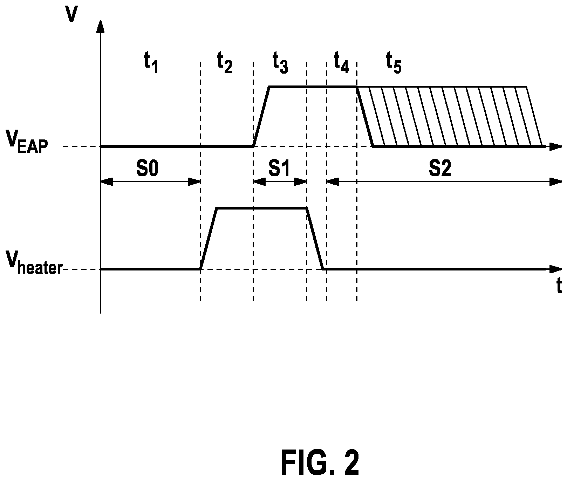

FIG. 2 shows an exemplary timing diagram for the operation of an actuator 100 from an initial shape S0 in a time interval $t_1$, a first shape in a time interval $t_3$ and a second shape in time intervals $t_4$ and $t_5$. The horizontal axis of the diagram represents time and the vertical axis represents voltage. Two curves are shown, the lower curve represents the voltage applied to the heating resistance (which is used for illustration purposes to correspond to the temperature, which is the case, for example, when the resistance is essentially real and linear). The upper curve represents the voltage applied to the electroactive layer 110.

In a first state during time interval $t_1$, the actuator 100 may have an initial shape S0, for example wherein the electroactive layer 110 and the elastic layer 120 are planar. During time interval $t_2$ voltage is provided to the heating resistance and consequently heat is provided to the elastic material layer 122. The provided heat is sufficient to change the temperature of the elastic material layer 122 from the first temperature T1 to the second temperature T2. At the second temperature, the elastic material layer 122 (and consequently the elastic layer 120) is elastically deformable due to a relatively low elastic modulus, which is lower than the elastic modulus of the elastic material layer 122 at the first temperature T1. Thus, during time interval $t_3$ the elastic material layer 122, and thereby the actuator 100, may be deformed by application of a force, for example, by application of voltage (VEAP) on the electroactive layer 110, for example into a first shape S1. The temperature of the elastic material layer 122 may be lowered to the first temperature T1, thereby, during time interval $t_4$ after cooling, the elastic modulus is increased. During time interval $t_5$, application

of a voltage to the electroactive layer 110 is no longer necessary, as the elastic material layer 122 is configured such that its increased elastic modulus ensures that the actuator does not return to the initial shape, and the combined effects of the much higher elastic modulus of the elastic material layer 122 at the first temperature T1 (than at T2) and the thermal contraction of the elastic material layer 122 keep the actuator into a second shape S2, for example, into a second state based on a latching mechanism. The timing diagram of FIG. 2 is only provided as an example, and the skilled person in the art would understand that other variations are possible. Energy consumption and actuation speed may be optimized by keeping the heating only for sufficient time for elastic material layer 122 achieve the second temperature T2 and the desired actuation has, by application of voltage (VEAP) to the electroactive layer 110, is completed. Energy consumption and actuation speed may be further optimized by reducing the time between the elastic material layer 122 has achieved the second temperature T2 and applying the desired voltage (VEAP) to the electroactive layer 110.

Application of voltage, as used in the present disclosure, means the control of a voltage, for example a voltage may be V1, or 0 V. The given voltages may be the absolute value of a voltage, in case components without polarity (e.g. a resistor) are independent on polarity. Accordingly, a change in voltage may refer to a change in voltage for example from V1 to V1/2 or from V1 to 0 V, or from 0 V to V1, wherein V1 > 0V, and 0V < V1/2 < V1. The application of a voltage of 0 V to the electroactive layer 110, or the non-application of voltage may have the same meaning.

The actuator according to various embodiments, may have a range of actuation limited by a voltage applied to the electroactive material, such that when the elastic material layer 122 is at the second temperature T2, the shape of the actuator may be continuously controlled by the applied voltage to achieve any shape between the shape when the temperature of the elastic material layer 122 is the second temperature T2 and no voltage or 0 V is applied to the electroactive layer and the second shape. In some embodiments, the range of actuation may be limited to between the shape when the temperature of the elastic material layer 122 is the first temperature T1 and no voltage or 0 V is applied to the electroactive layer and the second shape S2, for example, this allows for applications where a stiffness of the actuator is required in both (latching) states. The range of actuation may also be controlled by controlling T2, for example, a higher temperature may correspond to a lower elastic modulus, and a lower temperature may correspond to a higher elastic modulus. Thus, when a fixed voltage is applied to the electroactive layer 110, the shape of the actuator may be adjusted by controlling the temperature, the shape of the actuator may be continuously controlled by the temperature.

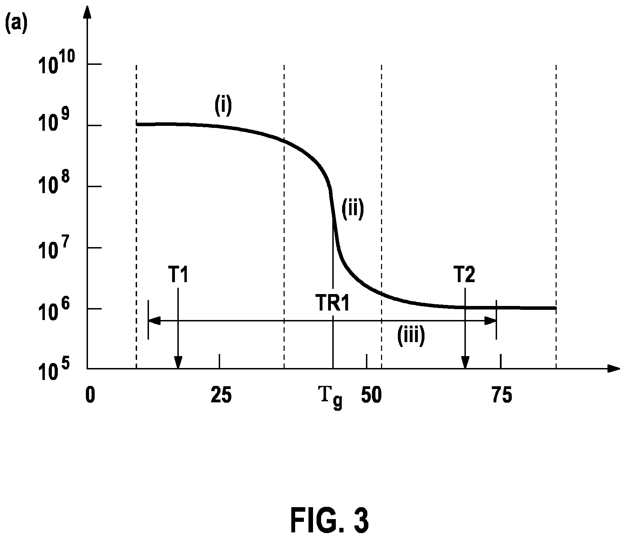

FIG. 3 shows a diagram representing elastic modulus (vertical axis) as function of temperature (horizontal axis) for an elastic material of the elastic material layer 122. During the thermal cycle depicted in FIG. 3, an enormous drop (up to 1000 times) in elastic modulus is expected, from 2.15 GPa at a first temperature, e.g. T1 = 20 °C (region (i) of "hard" glassy state below the glass transition temperature) to 1.4 MPa at a second temperature, e.g. T2 = 70 °C (region (iii) of "soft" rubbery state above the glass transition temperature). The elastic material of the elastic material layer 122 plays a role in the latching effect for holding a shape from a large bending motion in place against the restoring forces of the remaining actuator 100, e.g. including the electroactive layer 110, without continuous external electric excitation.

The elastic material may be a material with an enormous elastic modulus ratio of the elastic modulus at a first temperature T1 below the glass transition temperature to the modulus at a second temperature T2 above the glass transition temperature, for example, the ratio of the modulus at a second temperature T1 to the modulus at a first temperature T2 may be $>=10^2$, or $>=10^3$.

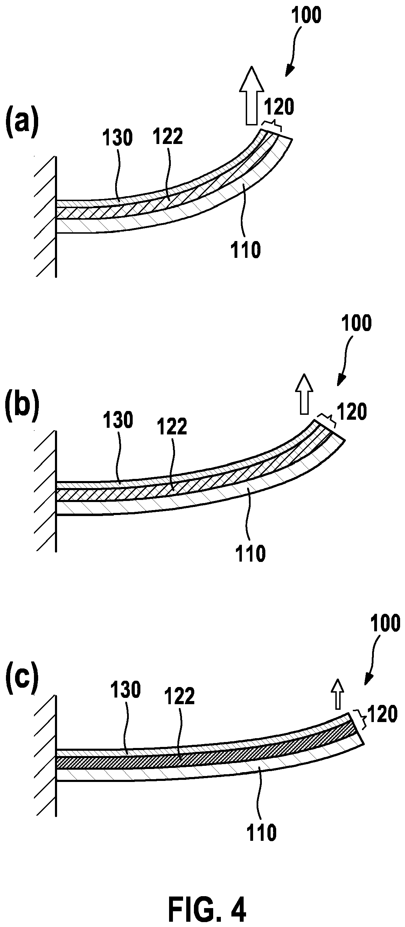

FIGs. 4(a)-(c) show an actuator 100 in three different shapes after different transitional temperature conditions, a same voltage is applied to the electroactive layer 110 in all conditions. In FIG. 4(a) the elastic layer is at a transitional temperature which is larger than the first temperature T1 and smaller than the second temperature T2. For example, the transitional temperature may be of about the glass transition temperature of the elastic material, for example the transitional temperature may be between +/- 5 °C of the glass transition temperature of the elastic material. At the transitional temperature, the elastic material layer 122 has a moderate elastic modulus, and due to the moderate volume contraction of the elastic layer (due to the application of the voltage to the electroactive layer 110), the actuator is bended in the direction from the electroactive layer 110 to the elastic layer 120 (shown as upwards). In FIG. 4(b), the temperature of the elastic material layer 122 is reduced to a temperature lower than the transitional temperature, for example at the first temperature T1. It can be seen that, due to the contraction of the elastic material layer 122, the bending is stronger (lever is higher) than the bending shown in FIG. 4(a). In FIG. 4(c), the elastic material layer 122 is heated to a temperature higher than the transitional temperature, for example to a second temperature T2. At this higher temperature, the elastic material has a lower elastic modulus (than the condition of FIG.s. 4(a) and 4(b)), and the elastic material layer 122 expands due to the higher temperature. Accordingly, it can be seen that the bending is less (lever is lower) than the bending shown in FIGs. 4(a) and 4(b).

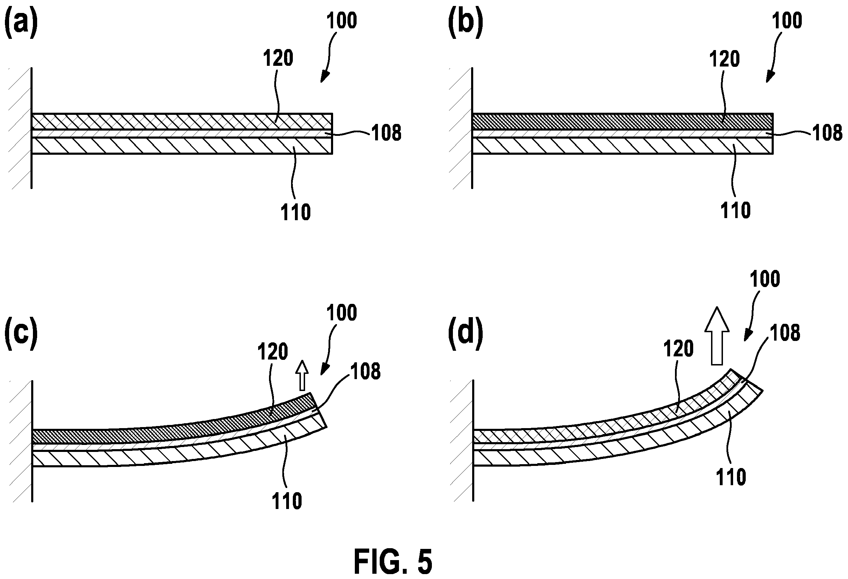

FIG. 5(a)-(d) illustrates an actuator identical to the one shown in FIGs 1(a)-(c), except that the resistance is included in the elastic material layer forming a common elastic layer 120 which may be further insulated from the electroactive layer 110 by an insulator 108. The heating resistance may be provided by an electrical resistance of the elastic material layer 122 itself, which may form a resistor. For example, the elastic material layer 122 may include an elastic material and a conductive filler, such as carbon black. The elastic material layer 122 fulfills the memory shape and the heating function. Accordingly, in FIG. 5(a), actuator 100 is shown with an initial shape S0. Electrical Joule heating may be provided to the electroactive layer 110, by application of a suitable voltage. FIG. 5(b) shows a state in which the electroactive layer 110 is heated to a second temperature T2. In FIG. 5(c) voltage applied to the electroactive layer 110 causes the actuator to bend in the direction from the electroactive layer 110 to the elastic material layer 122, into a first shape. The temperature may be lowered to the first temperature T1, while voltage continues to be applied to the electroactive layer 110. the combined effects of the much higher elastic modulus of the elastic material layer 122 at the first temperature T1 (than at T2) and the thermal contraction of the elastic material layer 122 may bring and keep the actuator into a second shape S2, without the requirement of application of a voltage greater unequal to zero on the electroactive layer 110 (FIG. 5(d)).

In one example, since the elastic modulus of conventional electroactive materials, e.g. an iEAP, may be around 200 MPa to 300 MPa, the electroactive layer 110 integrated with the elastic layer is capable to generate a large bending deformation when the heated elastic material layer 122 is at rubbery state (at the second temperature T2, the elastic modulus may be as low as 1.4 MPa, for example for SMPU). Furthermore, according to general relationship between actuation and holding force and equivalent elastic modulus from the cantilever beam model theory (see equation below), an elastic modulus change of the elastic material layer 122 according to external temperature, may be represented by the relationship between actuation force and equivalent elastic modulus $E_{eq}$ from cantilever beam model theory:

$$P = \frac{3\delta}{L^3} E_{eq} I$$

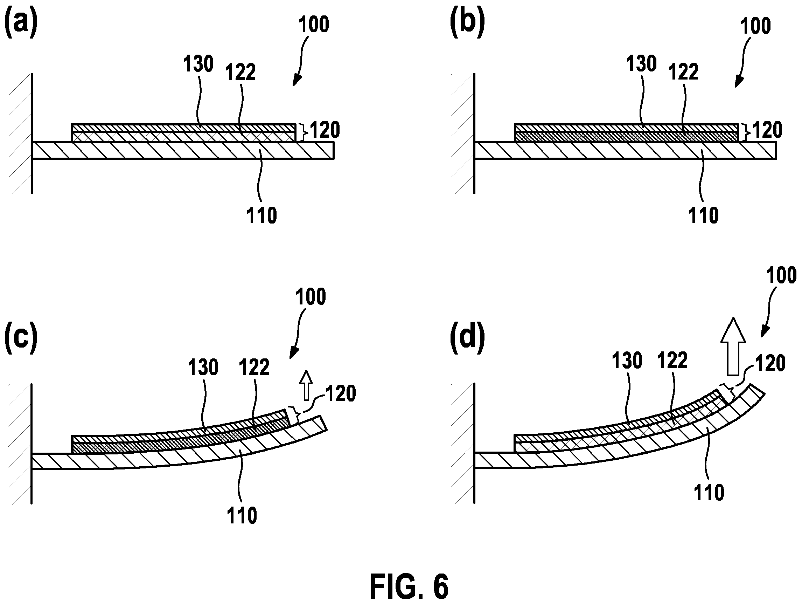

Wherein P is the holding force, $E_{eq}$ is the elastic modulus, L is the cantilever's length, $\delta$ is the measured tip displacement (deformation of cantilever beam), $I$ is the moment of inertia. The equivalent elastic modulus $E_{eq}$ and deformation $\delta$ are proportional to the holding force. In other words, by increasing the deformation and elastic modulus of the 100 actuator after cooling the elastic material layer 122, the holding force can be increased. While actuators have been shown wherein the elastic layer 120 includes an elastic material layer 122 and a heating element 130 (as in FIGs. 1(a)-(d)) or wherein the heating resistance is integrated in the elastic material layer 122 (as in FIGs. 5(a)-(d)), the actuator according to various embodiments is not limited thereto. For example, the layers do not need to be of same length, such as in the structure shown schematically in FIGs. 6(a)-(d).

FIGs. 6(a)-(d) show an actuator 100 wherein the elastic layer 120 includes a heating element 130 including a resistive material in thermal contact with the elastic material layer 122, and wherein the elastic layer 120 is shorter than the electroactive layer 110, meaning that elastic layer 120 and electroactive layer 110 only partially overlap in the first direction. The heating element 130 and the electroactive layer may be disposed on opposite sides of the elastic material layer 122. Similar as to shown in FIGs.1(a)-(d) and FIGs. 5(a)-(d), when the elastic material layer 122 is at the second temperature T2, a change of shape is possible depending on the voltage applied to the electroactive layer 110 and the lower restoring force coming from the lower elastic modulus of the elastic layer 120 (FIGs. 6(b) and (c)), resulting in easily overcoming its restoring force. When the elastic material layer 122 is at the first temperature T1, then the shape is fixed (FIGs. 6(a) and (d)), and does not change due to the insufficient voltage applied to the electroactive layer 110 and the higher restoring force coming from the higher elastic modulus of the elastic layer 120. The forces originated from cooling the elastic material layer 122, for example from the second temperature T2 to the first temperature T1 may be tailored by the dimensions of the elastic material layer 122, for example the forces may be reduced by providing a shorter elastic material layer 122.

According to various embodiments, the elastic material layer 122 may partially cover the electroactive layer 110, or may fully cover the electroactive layer 110.

According to some embodiments, the heating element 130 may be provided such that the elastic material layer 122 may be heated substantially in its entirety. Therefore, a good thermal contact (e.g. free of thermal insulator) may be provided between the heating element 130 and the elastic material layer 122. The heating element 130 may partially cover the elastic material layer 122, or may fully cover the elastic material layer 122.

According to some embodiments, the heating element 130 may include a length which is longer than a longest outer dimension of the elastic layer 120. For example, the heating element 130 may be patterned, for example in a sinusoidal shape. Thus the resistance of the heating element 130 may be adjusted by its dimension and/or by its material composition.

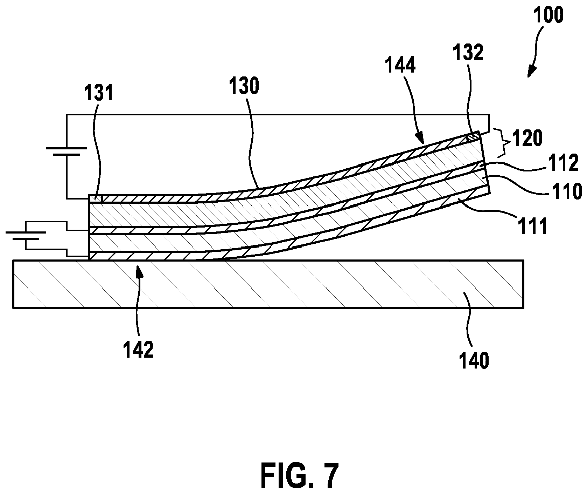

FIG. 7 shows an exemplary actuator 100 and the electrodes for applying a voltage on the electroactive layer 110 and current on at least one layer of the elastic layer 120 for providing resistive heat. The actuator 100 shown in FIG. 7 includes an electroactive layer 110 and an elastic layer 120. The first portion 142 of the actuator 100 is fixed (e.g. clamped) to a substrate 140 on the left side, therefore providing a fixed position and the second portion 144 is loose from the substrate, therefore allowing the actuator to bend. The elastic layer 120 may include an elastic material layer 122, and the first portion 142 may optionally be free of the elastic material layer. In one example, the elastic layer 120 may include a material capable of transporting electric current with a resistance greater than zero, thus the elastic layer 120 may include the heating resistance.

The elastic layer 120, in this example, the heating element 130 included in the elastic layer 120, may be connected to a first pair of electrodes 131 and 132 disposed at opposite ends of the heating element 130. The electroactive layer 110 may be connected to a second pair of electrodes 111 and 112 disposed at opposite sides of the electroactive layer 110.

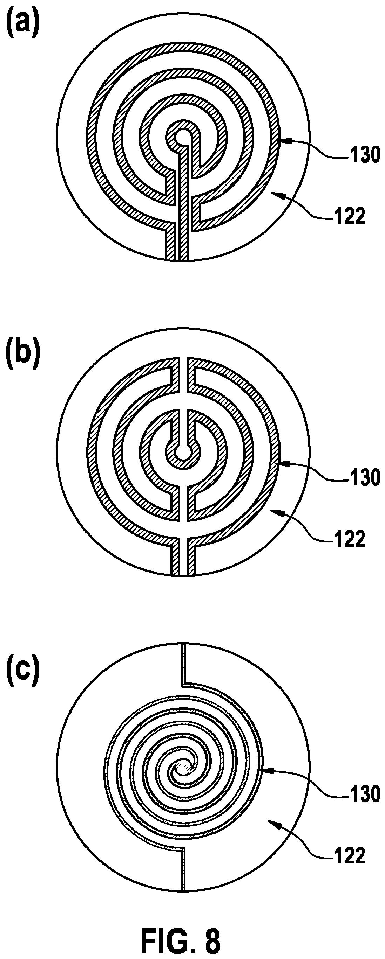

FIGs. 8(a)-(c) show exemplary geometries for the layer patterns of heating elements formed as layers from a top view. In each figure, the outer circle represents the elastic material layer 122, and the patterned area represents the heating element 130. The heating element may be formed from an electrically conductive but resistive material which may be deposited as a layer pattern, thus enabling higher resistances while keeping a reasonable coverage of the elastic material layer for a good heat transfer. The heating element may be of lower surface than the elastic material layer and may contact the elastic material layer. The heating element may be provided such that parts of the actuator free of elastic material layer are not substantially heated by the heating element. Such heating element designs may be provided in order to achieve fast and efficient cooling and heating functions, as well as to avoid fully heating the whole contact area of the film with user fingertips. Example of different heating element designs are shown in FIG. 8(a) as an inter-circulating patterns of heating element 130 on the elastic material layer 122, FIG. 8(b) as an interdigitated ring patterns of heating element 130 on elastic material layer 122, and FIG. 8(c) as spiral patterns (radial field) of heating element 130 on the elastic material layer 122.

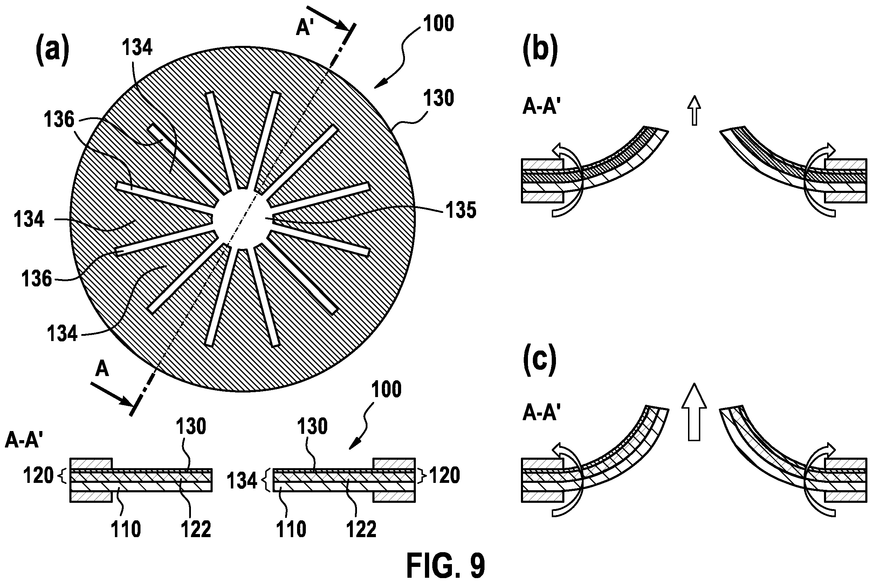

Various embodiments shown and described in connection with FIGs. 9(a)-(b), 10(a)-(b), and 11(a)-(b) may be based on the cantilever beam configurations of FIGs. 1(a)-(d), 5(a)-(d), and 6(a)-(d). The embodiments shown and described in connection with FIGs. 9(a)-(b), 10(a)-(b), and 11(a)-(b) are, *inter alia,* suitable for latching actuation.

FIGs. 9(a) shows a schematic top view (upper part of the figure) and a cross section A-A' (lower part of the figure) of an actuator 100 according to some embodiments. FIG. 9(b) shows one segment of the actuator (cross section A-A') wherein the elastic material is at the second temperature T2 and a voltage is applied to the electroactive layer. Once the temperature of the elastic layer is reduced to the first temperature T1 before the voltage is withdrawn, the actuator shows better actuation performance in the actuation shape as shown in FIG 9(c).

The actuator 100 may include an actuator substrate (not shown) to which a portion of the actuator is fixed. The fixing (e.g. clamping) of the actuator to the substrate is shown by hatched clamps for illustration purposes, however the disclosure is not limited thereto. The actuator 100 may include a center 135 and a plurality of radial slots 136 radially extending from the center 135 and may further include a plurality of segments 134. Actuator 100 portions between two adjacent slots of the plurality of radial slots 136 may define a plurality of segments 134. For example, each segment of the plurality of segments 134 may be formed by an actuator portion between two adjacent slots of the plurality of radial slots 136. Thus, the actuator may include bendable petal-shaped cantilevers 134.

The main role of the elastic material layer in the actuator design illustrated in FIG. 9(a) is to enhance the holding force and energy efficiency of the actuator as shown in FIG. 9(b). Furthermore, such button-type actuator integrated with elastic material layer (such as SMPU) can be easily fabricated through simple film coating and laser cutting process to achieve specific design parameters such as layer configuration, petal shape, thickness, diameter.

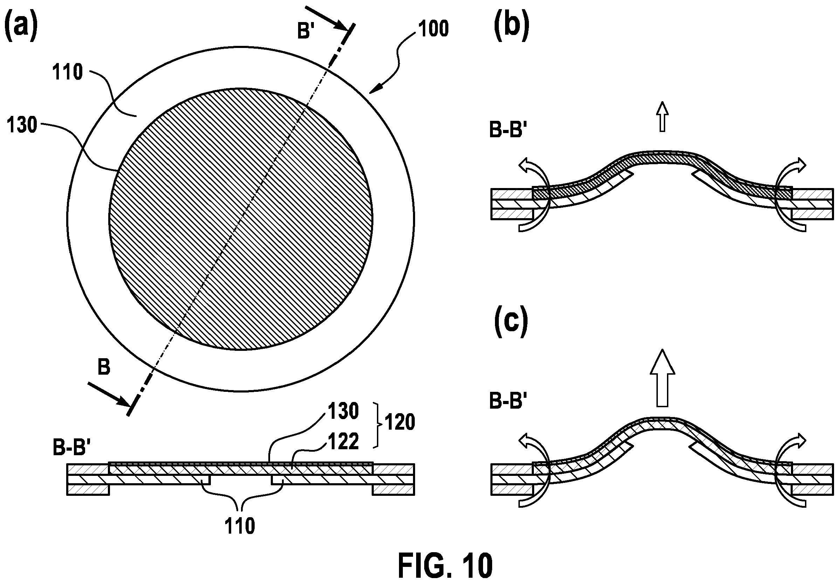

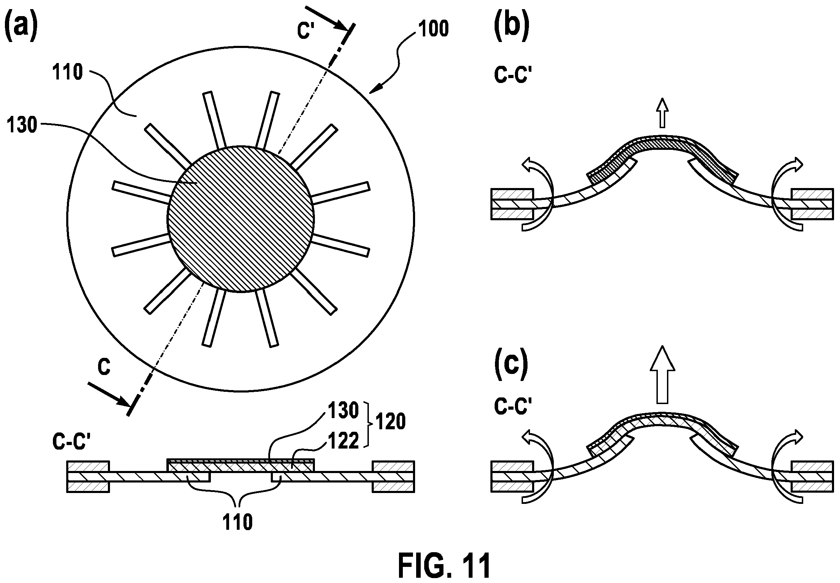

FIGs. 10(a)-(b) and FIGs. 11(a)-(b) represent another embodiment for the actuator 100. FIG. 10(a) shows a schematic top view (upper part of the figure) and a cross section B-B' (lower part of the figure, showing the actuator in an initial shape S0) of an actuator 100 according to some embodiments. The electroactive layer may be in form of a diaphragm. The electroactive layer may be segmented, for example as in FIG. 9(a), which, in these embodiments, are covered by the elastic layer 120. FIG. 10(b and c) shows the cross section B-B' when the actuator is in a first shape S1 or a second shape S2 of FIG. 10(a). FIG. 11(a) shows a schematic top view (upper part of the figure) and a cross section C-C' (lower part of the figure, showing the actuator in an initial shape S0) of an actuator 100 according to some embodiments. FIG. 11(b) shows the cross section C-C' when the actuator is in a first shape S1 or a second shape S2 of FIG. 11(a). In FIGs. 11(a)-(b), the elastic layer 120 may be disposed only at the center of the segmented electroactive layer, so that the segments are partially free of elastic layer 120 (as can be seen by the "free" gaps between the segments). The relative reduced area of the electroactive layer 110 allows for faster actuation of the actuator.

Such a design of an actuator 100, including an electroactive layer 110 with elastic layer 120, is suitable to be used as a button, and for generating a large out-of-plane deformation as well as large holding force, as a result of the latching effect from elastic layer 120. Furthermore, by tailoring the actuator 100 configurations such as wholly or partially covered elastic layer 120 on petal-shaped electroactive layer 110 button, it is possible to generate symmetrical (concentrically) and large out-of-plane shape-shifting deformation without geometrical constraint. Furthermore, by tailoring the actuator 100 configurations such as radially patterned elastic material layer 122 and/or heating element 130 (if provided separately) on the electroactive layer 110 diaphragm, it is possible to generate symmetrical (concentrically) and large out-of-plane shape-shifting deformation without geometrical constraint as well as faster heating and cooling response. Other exemplary elastic layer 120 patterned designs (a. inter-circulating patterns, b. interdigitated ring patterns, c. spiral patterns) on top of electroactive layer 110 diaphragm are shown in FIG. 8.

Radially patterned, ring shaped or button-shaped elastic layers on electroactive layers can generate a faster response and more symmetrical (concentrically) and larger out-of-plane shape-changing deformation without geometrical constraint as well as faster heating and cooling.

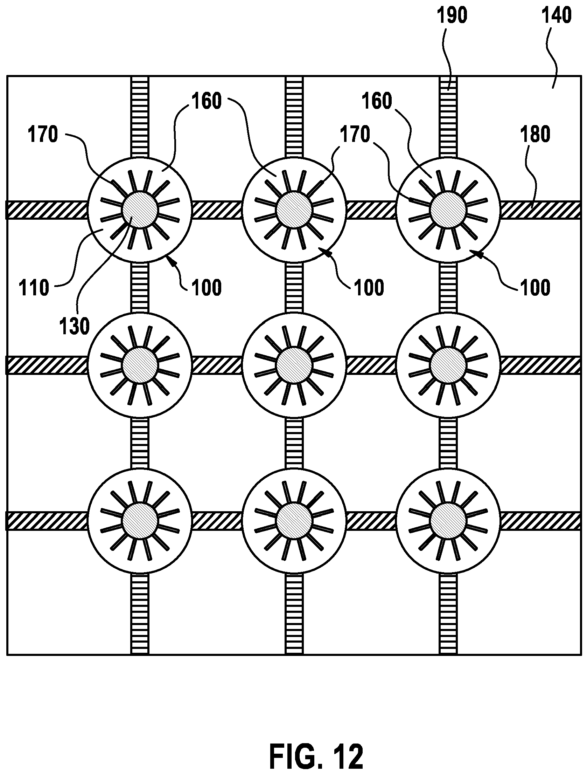

FIG. 12 shows a schematic representation of a touch screen including a plurality of actuators 100. The touch screen is shown from a top view (perpendicular to a substrate 140) and includes a plurality of actuators as described in the present disclosure. The actuators are illustrated, by means of example, as arranged in a repetitive pattern including an electroactive layer pattern 160 including the electroactive layer 110 on the substrate 140 and an elastic layer pattern 170 including the elastic layer 120, optionally wherein the elastic layer 120 is disposed farther from the substrate 140 than the electroactive layer 110, for example as a matrix of row and columns. The plurality of actuators may be provided on the substrate 140, which may be a common substrate. The substrate 140 may further include wirings (180, 190) for electrically coupling to the electrodes of the actuator 100. For example, there may be one column of wiring(s) for each column of actuators, and one row of wiring(s) for each row of actuators. While only 2 kinds of wirings are shown in the figure, a third or further wiring may be provided, for example the substrate may further include wiring(s) (not shown) for the heating elements. Different combinations of wirings thus enable the independent control of each actuator 100 and may also enable the independent sensing of the actuators. The actuators 100 may be implemented as a button as explained above. As explained, the touch screen, e.g. implemented as button array, may be used for large-scale hand-hold touch surfaces, by suitably synchronizing the local Joule heating with the electroactive layer bending motion.

## Claims

1. An actuator (100), comprising:

   an elastic layer (120);
   an electroactive layer (110) connected to the elastic layer (120);
   wherein the electroactive layer (110) comprises an electroactive material,
   wherein the electroactive material has an operating temperature range (TR1),
   wherein the elastic layer (120) has a first elastic modulus at a first temperature (T1), and a second elastic modulus lower than the first elastic modulus, at a second temperature (T2) higher than the first temperature (T1), wherein the operating temperature range (TR1) of the electroactive material includes the first temperature (T1) and the second temperature (T2), wherein the electroactive layer (110) is adapted to exert a first force onto the elastic layer (120) that opposes a restoring force of the elastic layer (120), when a voltage is applied to the electroactive layer (110), and
wherein the elastic layer (120) comprises an elastic material layer (122) comprising a shape memory polyurethane.

2. The actuator (100) of any one of the previous claims, wherein, at the second temperature (T2) a shape of the actuator (100) is adjustable by controlling the first force of the electroactive layer (110).

3. The actuator (100) of any one of the previous claims, wherein the electroactive layer (110) and the elastic layer (120) are configured such that, at the first temperature (T1), a maximum force applicable by the electroactive layer (110) is insufficient to overcome the restoring force of the elastic layer (120).

4. The actuator (100) of any one of the previous claims, further comprising a heating resistance configured to provide heat to the elastic layer (120).

5. The actuator (100) of claim 4, further comprising a pair of electrodes (131, 132), wherein the elastic layer (120) comprises a material capable of transporting electric current with a resistance greater than zero, wherein the elastic layer (120) is connected to the pair of electrodes (131, 132), and wherein the heating resistance is at least partially provided by the resistance of the elastic layer (120).

6. The actuator (100) of claim 4, further comprising a pair of electrodes (131, 132), wherein the elastic layer (120) further comprises a heating element (130) comprising a resistive material connected to the pair of electrodes (131, 132), and wherein the heating element (130) is in thermal contact with the elastic material layer (122) of the elastic layer (120), wherein the heating element (130) comprises the heating resistance, optionally wherein the heating element (130) has a length which is longer than a longest outer dimension of the elastic layer (120).

7. The actuator (100) of any one of the previous claims, wherein the electroactive material comprises an electroactive polymer, optionally an ionic electroactive polymer.

8. The actuator (100) of any one of the previous claims, wherein the shape memory polyurethane is configured to return to a pre-determined position at the first temperature (T1).

9. The actuator (100) of any one of the previous claims, further comprising a substrate (140), wherein a first portion (142) of the electroactive layer is at a fixed position in relation to the substrate (140),
wherein a second portion (144) of the electroactive layer is moveable between a first position and a second position, the second position being farther from the substrate (140) than the first position,
such that when the voltage is applied to the electroactive layer, the second portion (144) bends away from the substrate (140).

10. The actuator (100) of claim 9, wherein the elastic layer (120) and the electroactive layer (110) overlap at least partially, and optionally, wherein the electroactive layer (110) is disposed closer to the substrate (140) than the elastic layer (120).

11. The actuator (100) of any one of claims 9 to 10, wherein the second portion (144) is at least partially surrounded by the first portion (142), and the second portion (144) comprises a central opening (135), and wherein the elastic layer (120) is at least partially disposed on the elastic layer (120) and covers at least partially the central opening (135).

12. A touch screen comprising a plurality of actuators (100) according to any of the previous claims.

13. A method of producing the touch screen of claim 12, the method comprising:

- providing a substrate (140);
- providing an electroactive layer pattern (160) comprising the electroactive layer (110) on the substrate (140); and
- providing an elastic layer pattern (170) comprising the elastic layer (120), optionally wherein the elastic layer (120) is disposed farther from the substrate (140) than the electroactive layer (110).

14. A method of operating the actuator (100) according to any of the claims 1 to 11, comprising:

heating the elastic layer (120) to the second temperature (T2);
applying a first voltage to the electroactive layer (110), wherein the first voltage is unequal to 0 V, thereby setting a first shape (S1) of the actuator,
wherein when the temperature of the elastic layer (120) is the second temperature (T2) and no voltage or 0 V is applied to the electroactive layer (110), an initial shape (S0) of the actuator is set.

15. The method of claim 14, wherein when the actuator is in a first shape (S1), reducing the temperature of the elastic layer (120) by at least partially removing the application of heat causes a thermal contraction of the elastic layer (120), thereby setting an intermediate shape of the actuator (100).

16. The method of claim 14 or claim 15, further comprising:

setting an intermediate shape of the actuator (100), which comprises:

applying a second voltage smaller than the first voltage;
heating the elastic layer (120) to the second temperature (T2); and

optionally reducing the temperature of the elastic layer (120) by at least partially removing the application of heat, thereby setting the actuator to the intermediate shape.

FIG. 1

FIG. 2

FIG. 3

**FIG. 4**

FIG. 5

EP 3 764 198 A1

FIG. 6

EP 3 764 198 A1

FIG. 7

(a)

130

122

(b)

130

122

(c)

130

122

## FIG. 8

FIG. 9

FIG. 10

**(a)**

110

130

C'

100

C

C-C'

130 ⎫
122 ⎬ 120

110

**(b)**

C-C'

**(c)**

C-C'

# FIG. 11

EP 3 764 198 A1

FIG. 12

**Europäisches Patentamt**

**European Patent Office**

**Office européen des brevets**

# EUROPEAN SEARCH REPORT

Application Number

EP 19 18 5387

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/066636 A1 (KHOSHKAVA VAHID [US] ET AL) 8 March 2018 (2018-03-08) * paragraphs [0004], [0005], [0031] - [0046] * ----- | 1-16 | INV. G06F3/01 C22F1/00 F03G7/06 B06B1/06 B81B3/00 |
| X | US 2010/171393 A1 (PEI QIBING [US] ET AL) 8 July 2010 (2010-07-08) * paragraphs [0015] - [0017], [0071] - [0074], [0082] - [0083] * * paragraphs [0100] - [0103], [0113], [0123] - [0126] * ----- | 1,12-14 | |

**TECHNICAL FIELDS SEARCHED (IPC)**

G06F
C22F
F03G
B06B
B82B
B81B

The present search report has been drawn up for all claims

| Place of search | Date of completion of the search | Examiner |
|---|---|---|
| Munich | 12 December 2019 | Teiwes, Jürgen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...............................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 18 5387

This annex lists the patent family members relating to the patent documents cited in the above-mentioned European search report.
The members are as contained in the European Patent Office EDP file on
The European Patent Office is in no way liable for these particulars which are merely given for the purpose of information.

12-12-2019

| Patent document cited in search report | | Publication date | Patent family member(s) | | Publication date |
|---|---|---|---|---|---|
| US 2018066636 | A1 | 08-03-2018 | CN 107797660 A<br>EP 3291060 A1<br>JP 2018067299 A<br>KR 20180026351 A<br>US 2018066636 A1 | | 13-03-2018<br>07-03-2018<br>26-04-2018<br>12-03-2018<br>08-03-2018 |
| US 2010171393 | A1 | 08-07-2010 | NONE | | |

EPO FORM P0459

For more details about this annex : see Official Journal of the European Patent Office, No. 12/82